# NEUE EUROPÄISCHE PATENTSCHRIFT

(11) **EP 0 233 143 B2**
(45) Veröffentlichungstag und Bekanntmachung des Hinweises auf die Entscheidung über den Einspruch: **06.09.1995**
(45) Hinweis auf die Patenterteilung: 13.09.1989
(21) Anmeldenummer: 87810042.9
(22) Anmeldetag: 23.01.1987
(51) Int. Cl.: B60J 1/10, B61D 25/00

(54) **Aussenhaut von Fahrzeugen**
Vehicle body panels
Panneaux extérieurs de véhicules

(30) Priorität: 05.02.1986 CH 442/86
(43) Veröffentlichungstag der Anmeldung: 19.08.1987
(73) Patentinhaber: ALUSUISSE-LONZA SERVICES AG, 8034 Zürich (CH)
(72) Erfinder: Ritzl, Antal, CH-8047 Zürich (CH)
(74) Vertreter: Patentanwälte Breiter + Wiedmer AG

(56) Entgegenhaltungen:
- EP-A- 0 114 257
- CH-A- 466 906
- DE-A- 3 323 238
- FR-A- 1 197 209

## Beschreibung

Die Erfindung bezieht sich auf eine Aussenhaut von Fahrzeugen, insbesondere zur Beförderung von Personen auf Schiene, mit genau fluchtend einstellbarer, fest montierter Fensterverglasung, welche mittels an den Seitenwand- bzw. den Pfostenprofilen lösbar befestigter Fensterrahmenprofile über eine verdrehsichere Verschraubung in einer hinterschnittenen Längsnut gehaltert ist.

Die FR-A-1 197 209 beschreibt eine Automobiltüre mit einer versenkbaren, einfachen Glasscheibe. Der Fensterrahmen dieser Glasscheibe kann um eine in Längsrichtung des Fahrzeugs verlaufende, im mittleren Bereich der Scheibe angeordnete Achse geschwenkt oder in axialer Richtung von Gewindestiften verstellt werden. Im unteren Bereich sind Mittel zum Feststellen des Fensterrahmens angeordnet, u.a. ein durch eine festgelegte Platte mit Innengewinde geführter, mit einer Konterschraube feststellbarer Gewindestift, welcher in einer Führungsplatte der Scheibe drehbar gelagert ist. Die Aufgabe der französischen Patentschrift besteht darin, die Türen besser abzudichten, insbesondere im oberen Bereich. Der Mechanismus kann jedoch nicht dazu verwendet werden, eine Scheibe genau fluchtend einzustellen, was beim Konzept des vorliegenden Automobils gar nicht möglich wäre und auch keinen Sinn ergäbe.

Die DE-A-31 17 103 hat die Ausbildung der Einfassungen der Fenster von Fahrzeugen, insbesondere solchen des schienengebundenen Verkehrs, zum Gegenstand. Dabei sind die Fenstereinfassungen mit dem jeweiligen Fenster der Aussenhaut des Fahrzeuges bündig, wobei der Einfassrahmen die fahrzeuginnere Scheibe der aussenseitigen Verbundverglasung übergreift. Diese Scheibe ist entsprechend kleiner bemessen als die innere Scheibe. Dies bringt - zusammen mit der ebenfalls aussenhautbündigen Dichtung - eine Verbesserung des aerodynamischen Widerstands, eine Vereinfachung des Waschvorgangs und eine Verminderung von Geräuschen bei schneller Fahrt.

In der DE-A-33 44 180 wird angestrebt, die Aussenhautbündigkeit der Isolierglasfenster zu verbessern, indem die zum Ausgleich von Fertigungstoleranzen erforderliche, individuelle Montage des Fensterrahmens im Fensterausschnitt der Fahrzeugstruktur wesentlich vereinfacht wird. Dies wird dadurch erreicht, dass die Fahrzeugstruktur im Bereich des Fensterausschnitts als fahrzeuginnenseitig geschlitztes Hohlprofil ausgebildet ist, und die Befestigungsmittel jeweils den Hohlprofilschlitz hintergreifend in Schlitzlängsrichtung verschieblich am Hohlprofil positionierbar sind.

Zwischen dem Hohlprofil der Fahrzeugstruktur und dem Profilschenkel des Fensterrahmenprofils eingelegte und beim Festziehen der Schrauben festgeklemmte Ausgleichsmittel erlauben, dass die Aussenscheibe im eingebauten Zustand exakt fluchtend zur Fahrzeugaussenhaut ausgerichtet ist.

Die letztgenannte Druckschrift erlaubt im Gegensatz zur vorhergehenden, dass die Bündigkeit der Aussenscheibe der Verglasung in zur Aussenhaut senkrechter Richtung eingestellt werden kann. Dies ist jedoch ausserordentlich mühsam, müssen doch zahlreiche Dicken von Ausgleichsscheiben am Lager gehalten werden. Weiter kann nach der Montage die Bündigkeit der Aussenscheibe nur korrigiert werden, wenn alle Verschraubungen geöffnet und die Ausgleichsmittel ausgewechselt werden.

Der Erfinder hat sich deshalb die Aufgabe gestellt, eine Aussenhaut von Fahrzeugen mit genau fluchtend einstellbarer Fensterverglasung zu schaffen, wobei Fertigungstoleranzen auch in vertikal zur Aussenhaut verlaufender Richtung jederzeit und rundum problemlos ausgeglichen werden können, insbesondere auch bei montierter Fensterverglasung.

Die Aufgabe wird erfindungsgemäss nach dem Kennzeichen von Patentanspruch 1 gelöst.

Die Erfindung gewährleistet nicht nur eine einfache, schnelle Montage mit bescheidenen Hilfsmitteln, sondern stellt weiter sicher, dass die Bündigkeit der Aussenscheibe oder Teilen davon jederzeit und rundum ohne Demontagearbeit justierbar ist, vorgängig muss höchstens eine Abdeckung entfernt bzw. eine Kontermutter gelöst werden.

Die verstellbaren Mittel zum Verankern der Fensterrahmenprofile an der durch die Seitenwand- und die Pfostenprofile gebildeten Wagenstruktur bestehen im Prinzip aus drei Teilen:
- Einem Gewindestift,
- einem Positionierungsteil, welcher aus einem Schraubenkopf mit einer Verdrehsicherung und einer durchgehenden Bohrung zur Aufnahme des Gewindestifts und einer Festziehmutter mit Un-terlagscheibe besteht, und
- einem in bezug auf den Gewindestift längenverstellbaren Teil, welcher nach einer ersten Variante aus zwei Schrau-benmuttern, nach einer zweiten Variante aus einer in das Gewinde des Gewindestifts eingreifenden Verstellbüchse, einer Festziehmutter mit Unterlagscheibe und einer Kontermutter besteht.

Die verstellbaren Mittel zum Verankern der Fensterrahmenprofile werden meist mit dem Positionierungsteil nach aussen montiert. Falls dieser ausschliesslich aus metallischen Teilen ausgebildet ist, kann eine Kältebrücke entstehen, welche nach innen sorgfältig abgedeckt werden muss. Deshalb werden vorzugsweise Schraubenköpfe eingesetzt, welche aus einer Stahlbüchse bestehen, die mit einem Hartkunststoff umhüllt ist. In diesem Fall besteht die Unterlagscheibe der entsprechenden Festziehmutter ebenfalls aus einem Hartkunststoff. Zweckmässig bestehen die erwähnten Hartkunststoffteile aus Polyäthylen, Polypropylen oder einem Polyamid. Andere, an sich ebenfalls geeignete Kunststoffwerkstoffe, wie z.B. Polyvinylchlorid, werden heute wegen ihres umweltbelastenden Charakters weniger eingesetzt.

Die vom Schraubenkopf wegweisende Stirnseite des Gewindestifts weist, falls dieser zur Justierung der Bündigkeit der Aussenscheibe gedreht werden muss, in der Praxis eine Aussparung bzw. Anformung zur formschlüssigen Aufnahme eines Werkzeugs auf. Dabei sind alle bekannten Formen geeignet, beispielsweise ein Schlitz für einen Schraubenzieher, ein Sechskant-Sackloch für einen Imbusschlüssel oder eine vier- bzw. sechseckige Aussparung des Umfangs zum Ansetzen eines Gabelschlüssels.

Anstelle des Gewindestifts, welcher auch mit dem Schraubenkopf verbunden oder mit diesem einstückig ausgebildet sein kann, kann zur erwähnten Justierung auch die Verstellbüchse mittels eines an entsprechend ausgeformten Stellen angreifenden Werkzeugs gedreht werden.

Der Einbau des Fensterrahmenprofils kann von innen oder von aussen erfolgen. Im ersten Fall wird der Schraubenkopf des Positionierungsteils der verstellbaren Mittel in einer hinterschnittenen Längsnut eines Seitenwand- bzw. Pfostenprofils mit in Richtung des Fahrzeuginnern weisendem Längsschlitz festgezogen, im zweiten Fall in einer entsprechend ausgebildeten Längsnut des Fensterrahmenprofils.

Die Erfindung wird anhand von in der Zeichnung dargestellten Ausführungsbeispielen näher erläutert. Es zeigen schematisch:
- Fig. 1 einen vertikalen Teilschnitt durch den Uebergangsbereich Seitenwandprofil-Fensterverglasung, wobei der Einbau des Fensterrahmenprofils von aussen erfolgt,
- Fig. 2 einen vertikalen Teilschnitt durch den Uebergangsbereich Seitenwandprofil-Fensterverglasung, wobei das Fensterrahmenprofil von innen eingebaut wird,
- Fig. 3 einen vergrösserten Vertikalschnitt von Fig. 2 durch den Positionierungsteil,
- Fig. 4 einen horizontalen Teilschnitt im Bereich des Uebergangs von einem Pfostenprofil zur Fensterverglasung,
- Fig. 5 eine Variante von Fig. 1,
- Fig. 6 eine Variante von Fig. 1, und
- Fig. 7 eine Variante von Fig. 6.

Das stranggepresste Seitenwandprofil 10 aus einer geeigneten Aluminiumlegierung hat im obersten Bereich, nach innen versetzt, eine in vertikaler Richtung angeordnete Profilfahne 12. Ein Fensterrahmenprofil 14 hat eine in Längsrichtung verlaufende, im Querschnitt C-förmige hinterschnittene Längsnut 16, in welche seitlich mehrere Schraubenköpfe 18 von verstellbaren Mitteln 20 eingeführt werden. Diese werden über die ganze Länge des Fensterrahmenprofils 14 verteilt. Einstückig an den Schraubenkopf 18 angeformt ist eine Verdrehsicherung 22, welche in den in Richtung des Fahrzeuginnern weisenden Längsschlitz der hinterschnittenen Nut 16 eingeführt ist. Auf den ebenfalls einstückig mit dem Schraubenkopf 18 ausgebildeten Gewindestift 24 wird vorerst eine Unterlagscheibe 26 aus Kunststoff eingeschoben, worauf eine Festziehmutter 28 aufgeschraubt und angezogen wird. Dadurch wird der Gewindestift 24 fest positioniert. Der Schraubenkopf 18 mit der Verdrehsicherung 22, der Gewindestift 24 und die Festziehmutter 28 mit der Unterlagscheibe 26 werden deshalb als Positionierungsteil der verstellbaren Mitteln 20 bezeichnet.

Das Fensterrahmenprofil wird über den Gewindestift 24 in ein Loch bzw. ein in Längsrichtung des Seitenwandprofils 10 verlaufendes Langloch der Profilfahne 12 eingeführt. Während die eine Schraubenmutter 30 bereits vor dem Einführen des Gewindestifts 24 aufgeschraubt ist, wird die andere Schraubenmutter 32 nachher aufgeschraubt. Die beiden Schraubenmuttern 30 und 32 bilden im vorliegenden Fall, zusammen mit dem dem Schraubenkopf 18 fernen Ende des Gewindestifts 24 den längenverstellbaren Teil der kontinuierlich feststellbaren Mittel. Die beiden Schraubenmuttern können in exakt einstellbarer Lage angezogen und so das Fensterrahmenprofil 14 am Seitenwandprofil 10 verankert werden. Die Fensterverglasung 34 bekannter Bauart umfasst eine äussere Verbundscheibe 36 und eine innere einfache Scheibe 38. Ein Abstandstück 40 ist zugleich Stutzrahmen, Distanzhalter und Versiegelung des zwischen der Verbundscheibe 36 und der inneren Scheibe 38 liegenden Hohlraums. Die Fensterverglasung 34 wird in einen L-förmigen Anschlag 42, welcher mit einer Schicht Klebstoff 44 ausgelegt ist, eingepasst.

Von der inneren Scheibe 38 führt, vorerst bogenförmig geschwungen, eine innere Abdeckungsplatte 46 nach unten und schliesst sich dann an die innere Seitenprofilwand an. Damit kann ein gegebenenfalls nicht isolierter Schraubenkopf 18 keine Kältebrücke bilden.

Die fest verankerte Fensterverglasung kann exakt bündig an die Aussenhaut angepasst werden, indem die Schraubenmuttern 30, 32 in entsprechender Lage angezogen werden. Muss nun die Position der Fensterverglasung im Laufe der Zeit vertikal zur Verbundscheibe justiert werden, kann dies problemlos und ohne aufwendige Demontagearbeiten erfolgen, indem nach dem Entfernen der Abdeckungsplatte 46 die Schraubenmuttern 30, 32 gelöst, ihre Position leicht verändert und dann wieder angezogen werden.

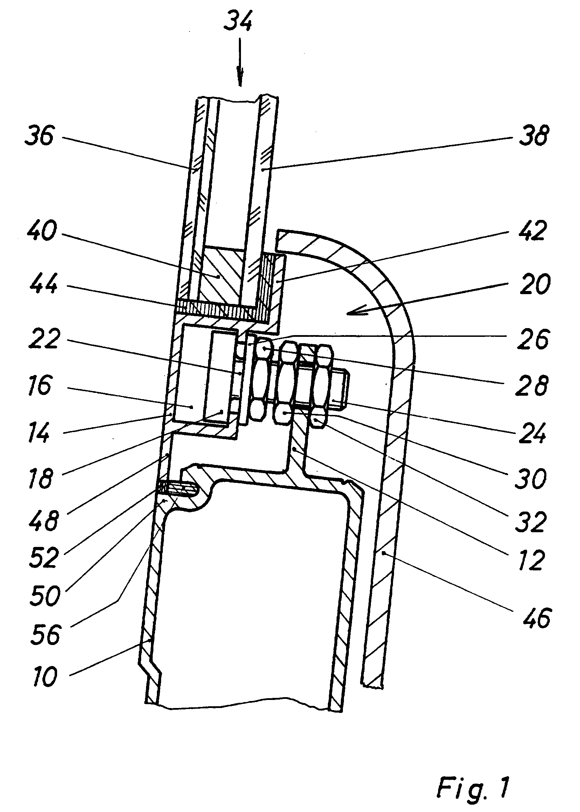

Im Beispiel von Fig. 1 besteht das Fensterrahmenprofil 14 aus einem gespritzten Kunststoffprofil. Da sich auf keinen Fall eine Kaltebrücke bilden kann, ist der Schraubenkopf 18 aus Kostengründen rein metallisch ausgebildet.

Das Seitenwandprofil 10 ist so stranggepresst, dass sich der Fuss 48 des Fensterrahmenprofils 14 indirekt auf der Schulter 50 des Seitenwandprofils 10 abstützen kann. Zwischen diesen beiden Teilen ist Klebstoff 52 aufgetragen, welcher nach dem Trocknen die Fuge zwischen Fensterrahmenprofil 14 und Seitenwandprofil 10 abdichtet. Eine im Bereich der Schulter 50 des Seitenwandprofils 10 in Längsrichtung verlaufende Horizontalnut ist mit Schaumstoff 56 gefüllt, welcher sich über dem horizontalen Bereich des Seitenwandprofils bis zur Profilfahne 12 erstreckt und so im Verbindungsbereich einen Schutz gegen Körperschallübertragung bietet.

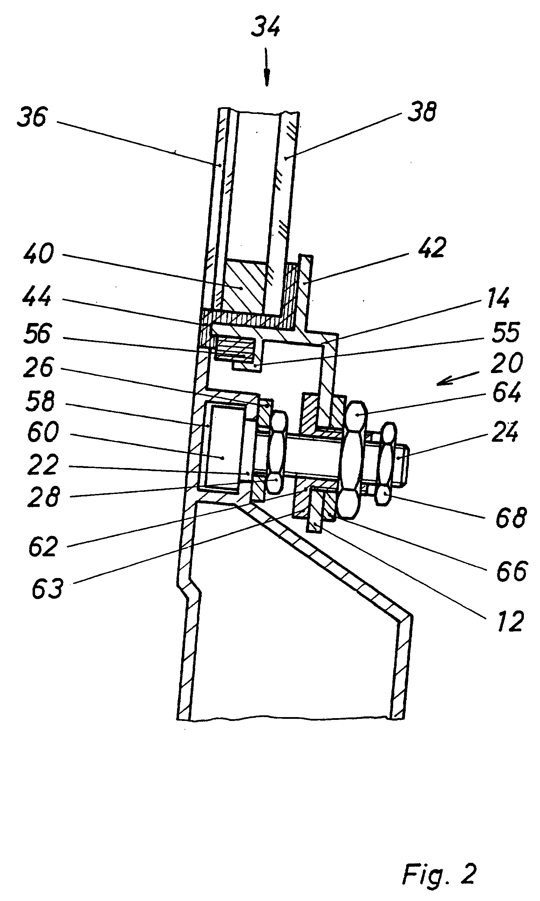

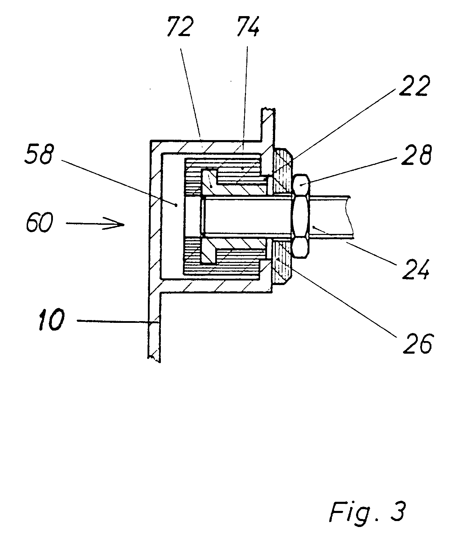

In der Ausführungsform nach Fig. 2 hat das Seitenwandprofil 10 in dessen oberstem Bereich eine hinterschnittene Längsnut 58, in welche seitlich mehrere Schraubenkopfe 60 des Positionierungsteils von verstellbaren Mitteln 20 eingeführt werden. Anhand des eingeführten Schraubenkopfs 60 ist die in den Längsschlitz der Nut eingeführte Verdrehsicherung 22 erkennbar. Ein isolierender Schraubenkopf 60 (Fig. 3) ist hier notwendig, weil sonst eine Kältebrücke gebildet wurde. Die Festziehmutter 28 wirkt über die Unterlagscheibe 26 aus Kunststoff auf den Schraubenkopf 60 ein, welcher gegen den Langsschlitz der im Querschnitt C-förmigen Horizontalnut 58 gezogen und so positioniert wird. Auf den im Schraubenkopf frei drehbaren Gewindestift 24 ist ein längenverstellbares Teil mit einer Verstellbüchse 62 aufgeschraubt, welche in jeder beliebigen Lage mittels einer Festziehmutter 64, die auf eine Unterlagscheibe 66 einwirkt, fixiert werden kann.

Das im vorliegenden Fall aus Aluminium bestehende Fensterrahmenprofil 14 wird über eine angeformte Profilfahne 12 befestigt, indem die Festziehmutter 64 die die erwähnte Profilfahne 12 in einem Loch bzw. Langloch durchgreifende Verstellbüchse 62 über ihre Basisplatte 63 festklemmt.

Die mit einem Schlitz versehene, in Richtung des Wageninnern weisende Stirnfläche der Verstellbüchse 62 kann mit einem Schraubenzieher oder einem ähnlichen Werkzeug durch Drehen in Längsrichtung des Gewindestifts 24 verschoben werden. Wenn ihre endgültige Lage festgelegt ist, wird die Verstellbüchse 62 mit einer Kontermutter 68 fixiert.

Die Fensterverglasung 34 mit der äusseren Verbundscheibe 36 und der inneren einfachen Scheibe 38, zusammengehalten vom Abstandstück 40, wird in den mit einer Klebstoffschicht 44 ausgelegten Anschlag 42 eingefügt. Der Raum zwischen der Klebstoffschicht 44 und dem L-förmigen Ansatz 55 ist mit Schaumstoff 56 gefüllt.

Muss gemäss Fig. 2 die Bündigkeit von äusserer Verbundscheibe 36 und der äusseren Oberfläche des Seitenwandprofils 10 neu eingestellt werden, kann die Kontermutter 68 gelöst bzw. entfernt und die Festziehmutter 64 gelöst werden. Nun kann die Verstellbüchse 62 gedreht werden, was eine genau einstellbare Abstandsveränderung zur Folge hat. Dann werden beiden Muttern wieder angezogen bzw. aufgesetzt.

In Fig. 3 ist ein Positionierungsteil von verstellbaren Mitteln mit wärmeisoliertem Schraubenkopf 60 gemäss Fig. 2 im Detail dargestellt. Die hinterschnittene Längsnut 58 des Seitenwandprofils 10 nimmt den Schraubenkopf 60 auf, welcher aus einer Stahlbüchse 72 und einem isolierenden Ueberzug 74 aus Polyäthylen besteht. Die Verdrehsicherung 22 ist in den Längsschlitz der hinterschnittenen C-förmigen Längsnut 58. eingeführt. Der Gewindestift 24 ist vor dem Anziehen der Festziehmutter 28, welche über die Unterlagscheiben 26 einwirkt, in der Stahlbüchse 72 frei drehbar. Am anderen Ende des Gewindestifts 24 ist das nicht sichtbare, längenverstellbare Teil angeordnet.

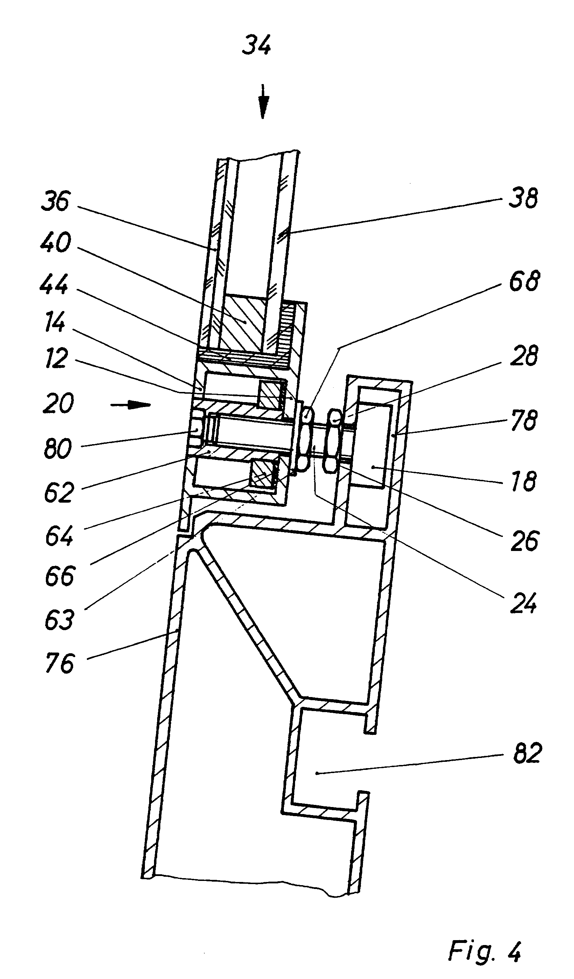

Das in Fig. 4 dargestellte Pfostenprofil 76 hat zur Befestigung der verstellbaren Mittel 20 mittels eines Schraubenkopfs 18 eine auf der Wageninnenseite verlaufende hinterschnittene Längsnut 78. Analog zur Fig. 2 wird eine Profilfahne 12 des Fensterrahmenprofils 14 von einer dem längenverstellbaren Teil zugehörigen Verstellbüchse 62 durchgriffen. Beim Einstellen der Bündigkeit der äusseren Verbundscheibe 36 wird ein Imbusschlüssel in das im Querschnitt sechseckige Sackloch 80 in der Verstellbüchse 62 gesteckt und diese im entsprechenden Sinne gedreht. Der Gewindestift 24 endet in einer blinden Axialbohrung der Verstellbüchse 62. Ein mit der Verstellbüchse 62 verbundener Ring 64 wirkt über eine Unterlagscheibe 66 auf die Profilfahne 12 ein. Diese wird von einer Kontermutter 68 mit einer Unterlagscheibe 63 fixiert. Die Verstellbüchse 62 ist analog zum in Fig. 3 dargestellten Schraubenkopf 60 isolierend ausgebildet.

Das Positionierungsteil mit dem Schraubenkopf 18 ist wie in den vorhergehenden Figuren 1 oder 2 ausgebildet.

Eine weitere hinterschnittene Längsnut 82 dient der Befestigung von anderen Konstruktionsteilen am Pfostenprofil 76.

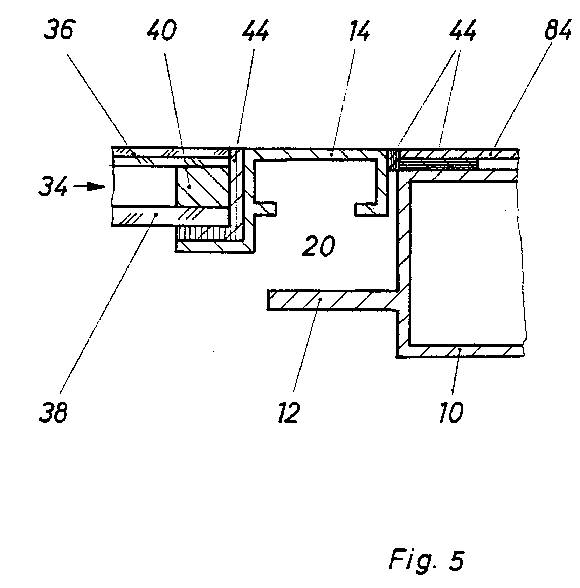

In Fig. 5 ist die Festlegung einer Blende 84, welche den Ton einer Glasscheibe hat, mittels eines Klebstoffs 44 gezeigt. Einfachheitshalber ist auf die Darstellung der verstellbaren Mittel 20 verzichtet worden, diese sind - wie die übrigen Konstruktionsteile - nach einer vorher dargestellten Ausführungsform konzipiert. Eine Isolierscheibe 34 mit äusserer Isolier- 36 und innerer Verglasung 38 ist mittels eines Klebstoffs 44 an einem Fensterrahmenprofil 14 befestigt, das seinerseits einstellbar an der Profilfahne 12 des Seitenwandprofils 10 fixiert ist.

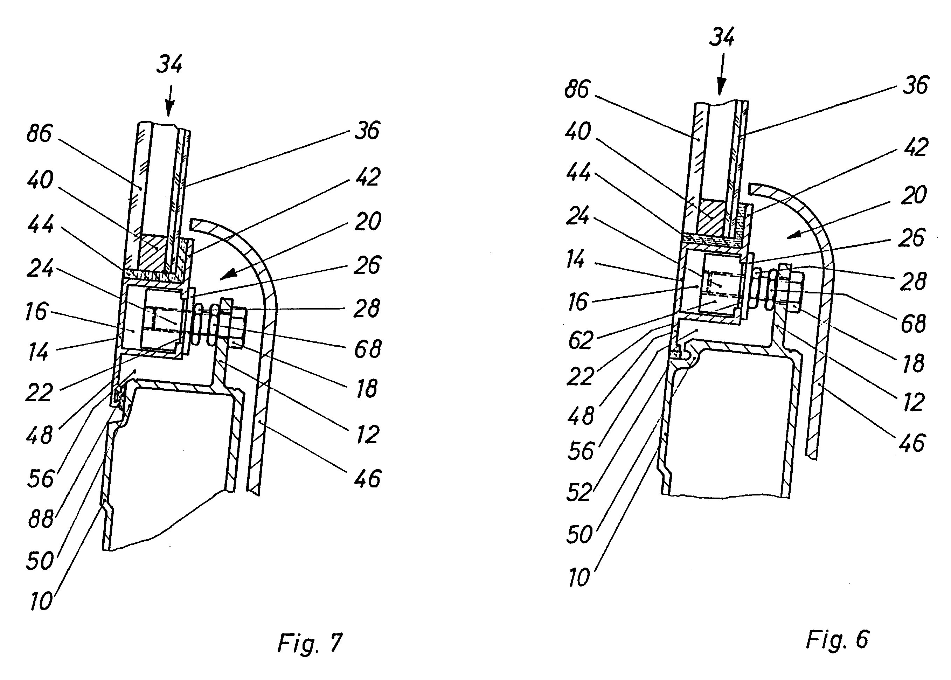

Nach Fig. 6, einer Variante von Fig. 1, ist eine normale Schraube aus einem Sechskant-Schraubenkopf 18 und einem Gewindestift 24 von innen durch eine Bohrung der Profilfahne 12 des Seitenwandprofils 10 gesteckt und mit einer Kontermutter 68 fixiert, wodurch der Positionierungsteil festgelegt ist. Der Gewindestift 24 ist in eine in der hinterschnittenen Längsnut 16 mittels einer Verdrehsicherung 22 festgelegte, isolierende Verstellbüchse 62 geschraubt. Diese Elemente bilden, zusammen mit der Festziehmutter 28, den längenverstellbaren Teil der verstellbaren Mittel 20.

Unterschiedlich zu Fig. 1 ist die Verbundscheibe 36 der Fensterverglasung 34 auf der Innenseite angeordnet. Die einfache Aussenscheibe 86 ist mit der Aussenhaut des Fahrzeugs bündig.

Im Vergleich zu Fig. 6 unterscheidet sich Fig. 7 nur durch eine in einer hinterschnittenen Längsnut angeordnete Dichtlippe 88, welche den Klebstoff 52 von Fig. 6 ersetzt und die in Längsrichtung verlaufende Fuge zwischen dem Fuss 48, dem Fensterrahmenpropfil 14 und dem Seitenwandprofil 10 füllt. Die Schulter 50 des Seitenwandprofils 10 ist entsprechend ausgebildet.

## Patentansprüche

1. Aussenhaut von Fahrzeugen, insbesondere zur Beförderung von Personen auf Schiene, mit genau fluchtend einstellbarer, fest montierter Fensterverglasung (34), welche mittels an den Seitenwand-(10) bzw. den Pfostenprofilen (76) lösbar befestigter Fensterrahmenprofile (14) über eine verdrehsichere Verschraubung in einer hinterschnittenen Längsnut (16, 58, 78) gehaltert ist,
dadurch gekennzeichnet, dass
mit einer Schraubbewegung in der Länge kontinuierlich verstellbare Mittel (20) zum Verankern der Fensterrahmenprofile (14) an den Seitenwand- (10) bzw. Pfostenprofilen (76) montiert sind, welche Mittel (20) ein Positionierungsteil aus einem Schraubenkopf (18, 60) mit einer Verdrehsicherung (22), einen Gewindestift (24) und eine Festziehmutter (28) mit Unterlagscheibe (26) sowie einen längenverstellbaren Teil aus zwei beidseitig einer Profilfahne (12) auf dem Gewindestift aufgebrachten Schraubenmuttern (30, 32, 62, 64) umfassen.

2. Aussenhaut nach Anspruch 1, dadurch gekennzeichnet, dass ein in Richtung der Fahrzeugaussenseite montiertes Positionierungs- oder längenverstellbares Teil der verstellbaren Mittel (20) wärmeisolierend gestaltet ist.

3. Aussenhaut nach Anspruch 1 oder 2, dadurch gekennzeichnet, dass das längenverstellbare Teil der verstellbaren Mittel (20) aus zwei auf demselben Gewindestift (24) wie das Positionierungsteil aufgebrachten, üblichen Schraubenmuttern (30, 32) besteht.

4. Aussenhaut nach Anspruch 1 oder 2, dadurch gekennzeichnet, dass das längenverstellbare Teil der verstellbaren Mittel (20) aus einer auf demselben Gewindestift (24) wie das Positionierungsteil aufgeschraubten Verstellbüchse (62), einer Festziehmutter (64) mit Unterlagscheibe (66) und einer Kontermutter (68) besteht.

5. Aussenhaut nach einem der Ansprüche 1-4, dadurch gekennzeichnet, dass der Schraubenkopf (60) aus einer mit einem Hartkunststoff (74) umhüllten Stahlbüchse (72) besteht, und die Unterlagscheibe (26) der entsprechenden Festziehmutter (28) ebenfalls aus einem Hartkunststoff besteht.

6. Aussenhaut nach Anspruch 5, dadurch gekennzeichnet, dass der Hartkunststoff aus Polyäthylen, Polypropylen oder einem Polyamid besteht.

7. Aussenhaut nach einem der Ansprüche 1 bis 6, dadurch gekennzeichnet, dass die vom Schraubenkopf (18,60) wegweisende Stirnseite des Gewindestifts (24) bzw. der Verstellbüchse (62) eine Aussparung (80) bzw. Anformung zur formschlüssigen Aufnahme eines Werkzeugs zum Drehen aufweist.

8. Aussenhaut nach einem der Ansprüche 1 bis 7, dadurch gekennzeichnet, dass der Schraubenkopf (18,60) des Positionierungsteils der verstellbaren Mittel (20) in der hinterschnittenen Längsnut (58) eines Seitenwand-(10) bzw. Pfostenprofils (76) mit in Richtung des Fahrzeuginnern weisendem Längsschlitz festgezogen ist, und der längenverstellbare Teil mit einer parallel zur Verglasung (34) verlaufenden Fahne (12) eines Fensterrahmenprofils (14) in kraftschlüssigem Eingriff steht.

9. Aussenhaut nach einem der Ansprüche 1 bis 7, dadurch gekennzeichnet, dass der Schraubenkopf (18,60) des Positionierungsteils der verstellbaren Mittel (20) in der hinterschnittenen Längsnut (16) eines Fensterrahmenprofils (14) mit in Richtung des Fahrzeuginnern weisendem Längsschlitz festgezogen ist, und der längenverstellbare Teil mit einer parallel zur Verglasung (34) verlaufenden Fahne (12) eines Seitenwand- (10) bzw. Pfostenprofils (76) in kraftschlüssigem Eingriff steht.

10. Aussenhaut nach einem der Ansprüche 1 bis 9, dadurch gekennzeichnet, dass die in Langsrichtung verlaufende Fuge zwischen dem Fensterrahmenprofil (14) und dem Seitenwandprofil (10) mittels einer in einer hinterschnittenen Längsnut angeordneten Dichtlippe (88) abgedichtet ist.

## Claims

1. Outer shell of vehicles, in particular for conveying people by rail, having rigidly mounted window glazing (34) which can be adjusted so as to be in exact alignment and is held by means of window frame profiles (14) secured releasably on the side-wall (10) and the pillar profiles (76) in an undercut longitudinal groove (16,58,78) by anti-twisting screwed joint, characterized in that means (20) for anchoring the window frame profiles (14) are mounted on the side-wall or pillar profiles (76), which means can be adjusted continuously in length by a screw movement and comprise a positioning part comprising a bolt head (18,60) having an anti-twisting device (22), a threaded stud (24) and a tightening nut (28) with washer (26) as well as a length-adjustable part comprising two nuts (30,32,62,64) mounted on the threaded stud (24) on both sides of a profile web (12).

2. Outer shell according to Claim 1, characterized in that a positioning part or a length-adjustable part of the adjustable means (20), which part is mounted in the direction of the outside of the vehicle, is of thermally insulating design.

3. Outer shell according to Claim 1 or 2, characterized in that the length-adjustable part of the adjustable means (20) comprise two standard nuts (30,32) mounted onto the same threaded stud (24) as the positioning part.

4. Outer shell according to Claim 1 or 2, characterized in that the length-adjustable part of the adjustable means (20) comprise an adjustment bush (62), a tightening nut (64) with washer (66) and a lock nut (68) screwed onto the same threaded stud (24) as the positioning part.

5. Outer shell according to one of Claims 1 to 4, characterized in that the bolt head (60) comprises a steel bush (72) sheathed with a hard plastic (74), and the washer (26) of the corresponding tightening nut (28) is likewise composed of a hard plastic.

6. Outer shell according to Claim 5, characterized in that the hard plastic is composed of polyethylene, polypropylene or a polyamide.

7. Outer shell according to one of Claims 1 to 6, characterized in that that end face of the threaded stud (24) or of the adjustment bush (62) which faces away from the bolt head (18, 60) has a recess (80) or an integral formation for the positive accommodation of a tool for turning.

8. Outer shell according to one of Claims 1 to 7, characterized in that the bolt head (18, 60) of the positioning part of the adjustable means (20) is tightened in an undercut longitudinal groove (58) of a side-wall (10) or pillar profile (76) having a longitudinal slot facing in the direction of the inside of the vehicle, and the length-adjustable part is in frictional engagement with a web (12) of a window frame profile (14), which web runs parallel to the glazing (34).

9. Outer shell according to one of Claims 1 to 7, characterized in that the bolt head (18, 60) of the positioning part of the adjustable means (20) is tightened in the undercut longitudinal groove (16) of a window frame profile (14) having a longitudinal slot facing in the direction of the inside of the vehicle, and the length-adjustable part is in frictional engagement with a web (12) of a side-wall (10) or pillar profile (76), which web runs parallel to the glazing (34).

10. Outer shell according to one of Claims 1 to 9, characterized in that the joint extending in the longitudinal direction between the window frame profile (14) and the side-wall profile (10) is sealed by means of a sealing lip (88) arranged in an undercut longitudinal groove.

## Revendications

1. Panneau extérieur de véhicules, en particulier pour le transport des personnes sur voie ferrée, comportant un vitrage de fenêtre (34) solidement monté que l'on peut régler affleurant avec précision et qui est maintenu au moyen de profilés de cadre de fenêtre (14) fixés, de façon amovible, sur les profilés (10) de paroi latérale ou sur les profilés (76) des montants dans une rainure longitudinale (16,58,78) par un vissage sans avoir de liberté de rotation,
caractérisé en ce que
des moyens (20) continuellement réglables en longueur par un mouvement de vis pour ancrer les profilés (14) de cadre de fenêtre sont montés sur les profilés (10) de paroi latérale ou (76) sur les profilés des montants, moyens qui comprennent une pièce de positionnement constituée d'une tête de vis (18,60) avec un verrou antirotation (22), d'une tige filetée (24) et d'un écrou de blocage (28) avec rondelle intermédiaire (26) ainsi que d'une pièce, réglable en longueur, constituée de deux écrous (30,32,62,64) rapportés sur la tige filetée (24) des deux côtés d'un talon (12).

2. Panneau extérieur selon la revendication 1, caractérisé en ce qu'une pièce de positionnement ou une pièce réglable en longueur, montée dans la direction du côté extérieur du véhicule, des moyens réglables (20) est prévue thermiquement isolante.

3. Panneau extérieur selon la revendication 1 ou 2, caractérisé en ce que la pièce réglable en longueur des moyens réglables (20) est constituée de deux écrous (30,32) usuels rapportés sur la même tige filetée (24) comme la pièce de positionnement.

4. Panneau extérieur selon la revendication 1 ou 2, caractérisé en ce que la pièce réglable en longueur des moyens réglables (20) est constituée d'une fourrure de réglage (62), d'un écrou de blocage (64) avec rondelle intermédiaire (66) et d'un contre-écrou (68) vissés sur la même tige filetée (24) comme la pièce de positionnement.

5. Panneau extérieur selon l'une des revendications 1 à 4, caractérisé en ce que la tête de vis (60) est constituée d'une fourrure d'acier (72) entourée d'un plastique dur (74), et en ce que la rondelle intermédiaire (26) de l'écrou de blocage correspondant (28) est également en plastique dur.

6. Panneau extérieur selon la revendication 5, caractérisé en ce que le plastique dur est constitué de polyéthylène, de polypropylène ou d'un polyamide.

7. Panneau extérieur selon l'une des revendications 1 à 6, caractérisé en ce que la face frontale, côte opposé à la tête de vis (18, 60), de la tige filetée (24) ou de la fourrure de réglage (62) présente un évidement ou un bossage pour recevoir, avec liaison par la forme, un outil pour la faire tourner.

8. Panneau extérieur selon l'une des revendications 1 à 7, caractérisé en ce que la tête de vis (18, 60) de la pièce de positionnement des moyens réglables (20) est bloquée dans une rainure longitudinale (58) d'un profilé (10) de paroi latérale ou (76) de montant qui forme chambrage et qui présente une fente longitudinale orientée vers l'intérieur du véhicule ; et en ce que la pièce réglable en longueur est en prise, de par la force, avec un talon (12), parallèle au vitrage (34), d'un profilé (14) de cadre de fenêtre.

9. Panneau extérieur selon l'une des revendications 1 à 7, caractérisé en ce que la tête de Vis (18, 60) de la pièce de positionnement des moyens réglables (20) est bloquée dans la rainure longitudinale (16) d'un profilé (14) de cadre de fenêtre qui forme chambrage et qui présente une fente longitudinale orientée vers l'intérieur du véhicule ; et en ce que la pièce réglable en longueur vient en prise, de par la force, avec un talon (12), parallèle au vitrage (34), d'un profilé (10) de paroi latérale ou (76) de montant.

10. Panneau extérieur selon l'une des revendications 1 à 9, caractérisé en ce que le joint qui court dans la direction longitudinale, entre le profilé (14) du cadre de fenêtre et le profilé (10) de paroi latérale, est rendu étanche au moyen d'une lèvre d'étanchéité (88) disposée dans une rainure longitudinale en contredépouille.
